# FASCICULE DE BREVET EUROPEEN

(11) **EP 0 696 418 B1**
(45) Date de publication et mention de la délivrance du brevet: **11.07.2001**
(21) Numéro de dépôt: 95440050.3
(22) Date de dépôt: 02.08.1995
(51) Int. Cl.: A01G 3/04

(54) **Machine de coupe utilisable notamment pour la taille ou prétaille de vignes palissées**
Schneidemaschine, insbesondere zum Gebrauch für den Schnitt und Vorschnitt der Weinstöcke in Drahtrahmenanlagen
Cutting machine to be used especially for pruning and pre-pruning tied vines

(30) Priorité: 11.08.1994 FR 9410059
(43) Date de publication de la demande: 14.02.1996
(73) Titulaire: BINGER FRANCE SARL, 68127 Niederhergheim (FR)
(72) Inventeur: Andelfinger, Georges, F-68127 Niederhergheim (FR)

(56) Documents cités:
- EP-A- 0 147 344
- DE-C- 4 037 590
- FR-A- 2 576 481
- FR-A- 2 635 251

## Description

La présente invention porte sur une machine de coupe utilisable notamment pour la taille ou prétaille de vignes palissées selon le préambule de la revendication 1 ou 6.

La présente demande procède d'une division de la demande FR - 94.10059 de la titulaire.

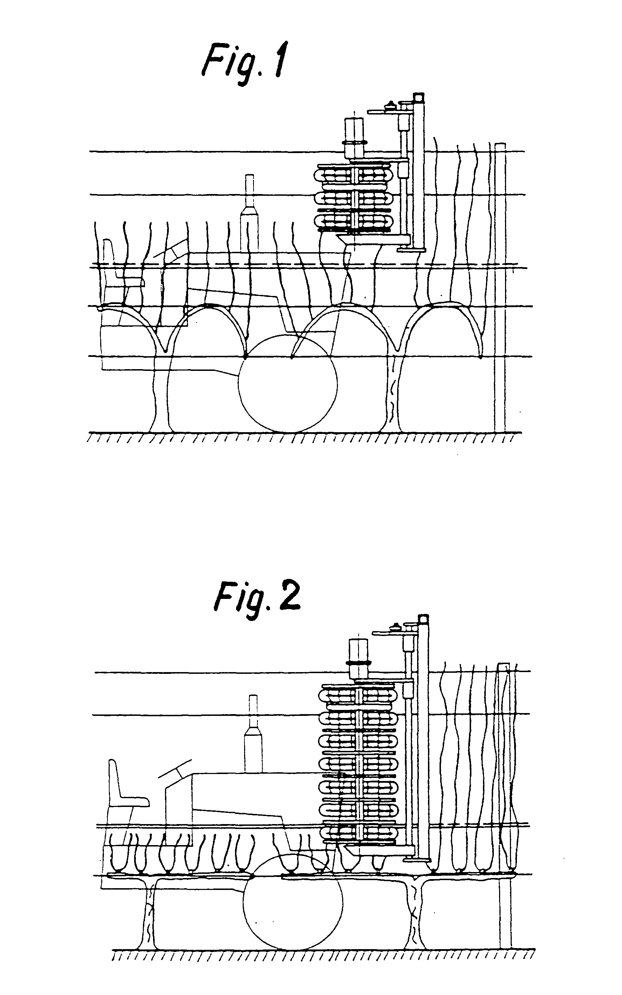

Avant d'énumérer l'ensemble des problèmes qui se posent, rappelons en premier lieu que les vignes palissées se présentent sous différents types de taille. Citons parmi ceux-ci la taille en demi-arc ou taille en guyot (Fig. 1) ou la taille dite en cordon de royat (Fig. 2) et que les travaux de taille sont effectués sur une période d'environ 6 mois après les vendanges. Avec le type de taille guyot, le niveau de coupe est relativement haut, les sarments sont souples et la végétation est en général peu importante et assez régulière. La mise en oeuvre de machines de coupe dans les vignes répondant à ce type de taille n'est pas trop délicate (sous réserve d'éventuelles difficultés invoquées plus loin). En revanche, avec le type de taille en cordon, le niveau de coupe est bas (en général directement au-dessus du fil inférieur), les sarments-porteurs ou coursons sont rigides et la végétation est dense et assez irrégulière. On comprend qu'il est ici nettement moins évident et moins facile d'exécuter un travail de qualité. Et la difficulté se trouve renforcée encore du fait que le ménagement desdits coursons est d'importance primordiale, la rupture ou l'endommagement de ceux-ci compromettant la récolte future.

Par ailleurs, et indépendamment du type de taille, les machines de coupe évoluent non rarement dans des conditions difficiles, dues au relief (terrains accidentés) et/ou à la présence de toutes sortes d'obstacles (autres que les piquets) (souches par exemple) et/ou encore aux états médiocres du palissage (fils détendus, rouillés, proche de la limite d'élasticité mécanique, etc.).

Les problèmes rencontrés sur ce type de machine de coupe ou buts à atteindre sont nombreux et variés :
- ménagement des poteaux (échalas, piquets métalliques ou en matière synthétique), des tendeurs
- Confort d'utilisation et fiabilité : automatisation optimale, sécurité d'emploi, réduction des sollicitations des éléments mécaniques composant la machine ;
- Régularité de l'alimentation ;
- Tirage des sarments coupés, c'est-à-dire extraction et dégagement de ceux-ci hors des fils de palissage, ces sarments tendant à y rester accrochés par des vrilles, tout en ménageant les plants, poteaux et fils ;
- Problème particulier du ménagement des coursons (sarments-porteurs) à leur base, tout en ne compromettant pas l'opération d'extraction des sarments (taille en cordon) ;
- Exhaustivité et qualité de coupe, cette qualité devant être toujours égale.

Il est à souligner que ces buts - à concilier avec celui, plus général, d'une construction rationnelle, donc d'une réduction du coût de la machine - sont à atteindre, quelles que soient les conditions de mise en oeuvre (voir plus haut : type de taille, palissage, etc.).

Le problème que la présente invention se propose de résoudre est celui du tirage hors des fils de palissage des sarments coupés restant accrochés auxdits fils.

EP-0,147,344 divulgue une machine de coupe du genre défini en introduction, présentant une tête de coupe avec deux ensembles de coupe 1, 2 identiques comportant chacun un empilage d'outils de coupe 3 travaillant par cisaillement. L'outil de coupe comprend deux éléments. L'élément extérieur 4, appelé cage, est formé d'un disque à denture périphérique et à nervures radiales soudées sur chacune des faces du disque, le nombre de nervures sur chaque face étant égal au nombre de dents, une nervure s'étendant chaque fois de la zone centrale à l'extrémité de la dent correspondante ; il est soumis à un entraînement continu en rotation et remplit le fonction de lame et, théoriquement, une fonction de protection. L'élément intérieur 5 est un disque présentant sur une partie de sa périphérie des dents ; il est fixe, plaqué contre le disque de l'élément extérieur et remplit la fonction de contre-lame. Les outils d'un ensemble peuvent interpénétrer dans des espaces ménagés entre-outils de l'autre ensemble, l'ouverture des ensembles 1, 2 étant actionné au moyen d'un vérin 6 commandé par l'opérateur, les supports 8, 9 se trouvant sous l'action de ressorts de rappel.

L'extraction des sarments coupés hors des fils, notamment dans toutes les situations de taille en cordon, est médiocre.

La machine décrite dans DE-40 37 590 ou FR-91 14502 part d'un concept tout à fait différent, lequel permet de réduire les inconvénients de la machine selon EP-0,147,344, mais pas encore de manière satisfaisante.

La machine selon FR-91 14502 présente une tête de coupe avec deux unités 10, 20 non identiques avec fonction d'interpénétration. L'une 10 des unités comporte un empilage d'outils de coupe 12, l'autre 20 un empilage d'outils-ameneurs 22 (ci-après ameneurs). L'outil de coupe comprend deux éléments. L'élément extérieur 13 est une cage formée de deux disques reliés à leur périphérie par des arceaux 14 en forme de "U" ; il est soumis à un entraînement libre en rotation et remplit une fonction de protection (poteaux, fils, tendeurs, élément intérieur). L'élément intérieur 15 est une scie circulaire effectuant la coupe ; elle est enveloppée par la cage, indépendante de celle-ci et entraînée en rotation à une vitesse de l'ordre de 1000 t/min. L'ameneur est formé d'un disque présentant une denture 23 à sa périphérie, les flancs de ces dents étant droits et ouverts à un angle de 90°. L'unité d'ameneurs est soumise à un entraînement continu en rotation. L'ouverture des ensembles 10, 20 est actionnée par un vérin commandé par l'opérateur.

Selon leur degré d'ouverture/fermeture, les unités 10, 20 peuvent coopérer entre elles par l'intermédiaire d'une roue à friction 25 (roue pourvue d'une bande de caoutchouc) et une jante 16, placées respectivement au-dessus de l'ensemble 20 et 10.

Les moyens adoptés ne permettent pas de maîtriser le mouvement des cages libres en rotation. Du fait de l'absence de cette maîtrise de la vitesse de rotation des cages, l'opération de tirage des sarments coupés n'est pas résolue de façon satisfaisante non plus.

Selon l'invention, le problème du tirage, hors des fils de palissage, des sarments coupés restant accrochés par leurs vrilles auxdits fils (essentiellement le fil ou les deux fils supérieurs) est résolu, en priorité grâce aux moyens définis dans la revendication 1. Une autre solution à ce problème est fournie par les moyens de la revendication 5. Ces deux solutions qui visent le même but peuvent être adoptées séparement l'un de l'autre. Bien sûr leur combinaison permettra d'optimiser la solution au problème d'extraction des sarments.

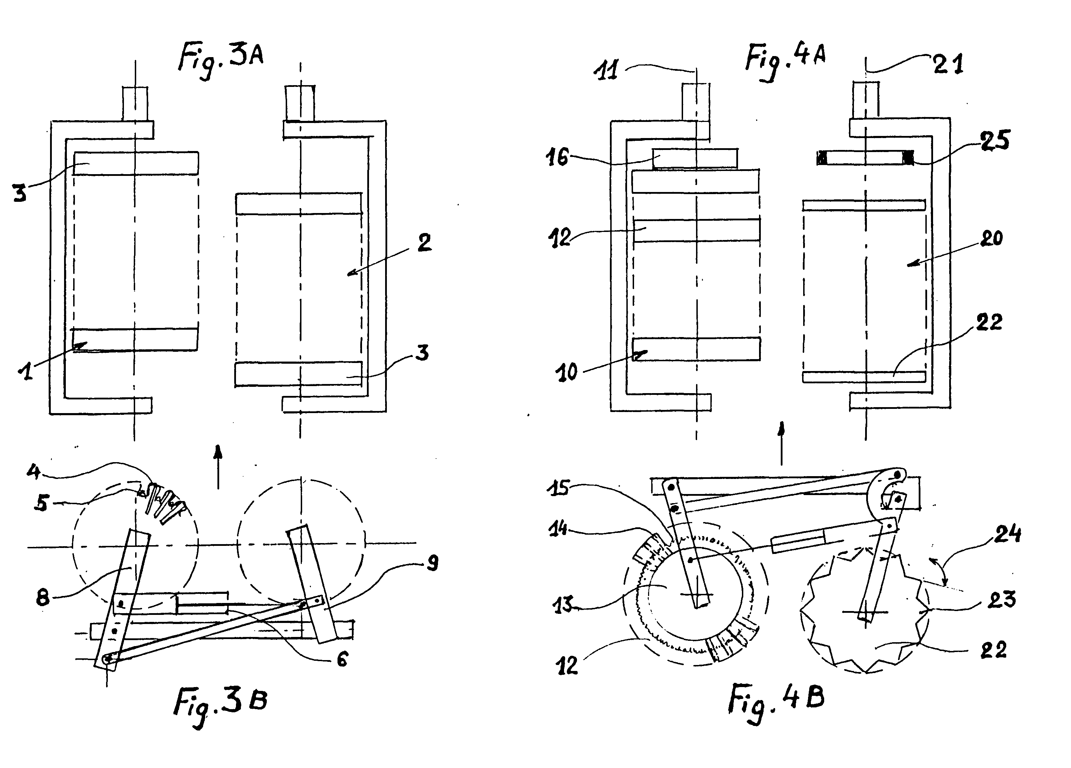

On va décrire à présent en détail, à titre d'exemples, des formes d'exécution de la machine de coupe (ci-après la prétailleuse) selon l'invention, à l'appui des dessins annexés où
- la Fig. 5: montre une vue arrière (c'est-à-dire en regardant dans le sens d'avancement) des modules de coupe et des ameneurs en phase d'interpénétration,
- la fig. 6: représente une vue de dessus de la prétailleuse,
- la Fig. 7: est une coupe de la cage selon une ligne VII - VII de la figure 5,
- la Fig. 8: est une demi-coupe de la cage selon une ligne VIII - VIII de la figure 7,
- la Fig. 9: est une vue en plan partielle d'un ameneur,
- la Fig. 10: est une demi-coupe de l'ameneur selon une ligne X - X de la figure 9
- la Fig. 11: est une coupe d'un dispositif destiné à ménager les coursons,
- la Fig. 12: est une coupe de la partie inférieure du module de coupe montrant l'empilage des cages,
- la Fig. 13: est un schéma de branchement des moteurs des scies, ameneurs, outils de coupe et vérin,
- la Fig. 14: est un schéma d'une variante de branchement de la Fig. 13, et
- la Fig. 15: est un schéma explicatif concernant le tirage des sarments,
(étant rappelé que les figures 1 à 4 ont été mentionnées pour situer les domaines d'applications typiques des prétailleuses et commenter les antériorités les plus proches).

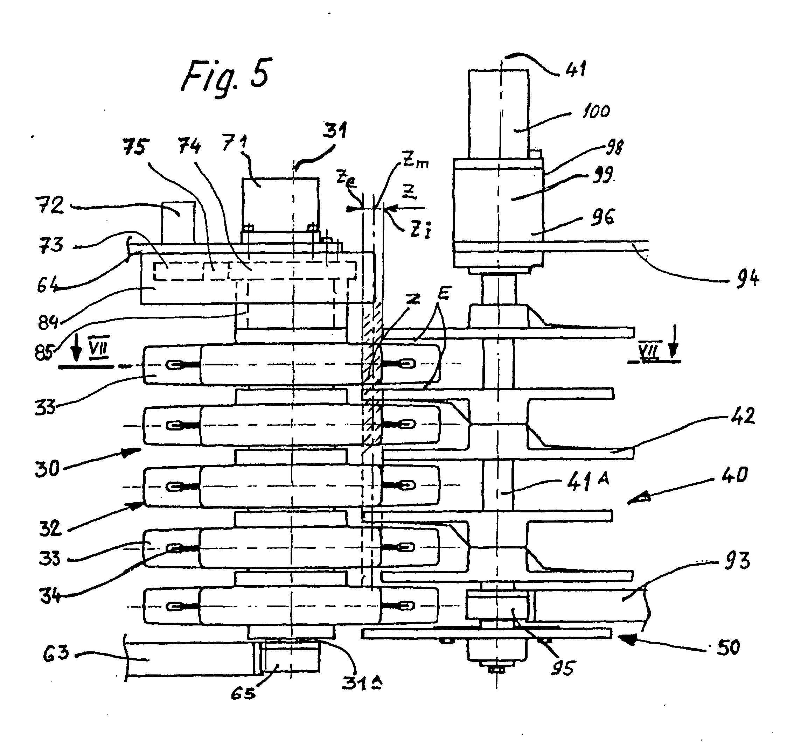

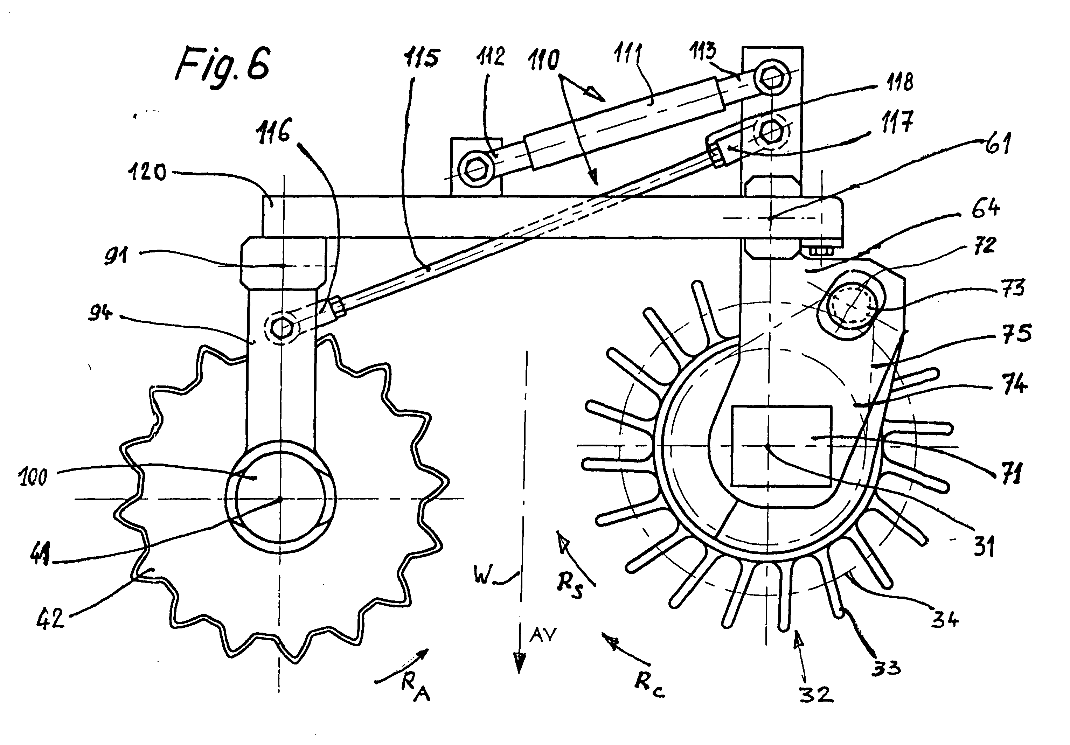

Les figures 5 et 6 permettent de présenter la prétailleuse appelée à être agencée dans la zone avant droite ou latérale droite d'un tracteur non représenté. Le sens d'avancement de la prétailleuse est symbolisé par la flèche AV sur la figure 6, tandis qu'à la figure 5, la prétailleuse est vue de l'arrière, l'observateur étant placé en regardant dans le sens d'avancement. On aperçoit un module de coupe 30 d'axe 31 et un module ameneur 40 d'axe 41. Le module de coupe 30 comprend un empilage d'outils de coupe 32 sur un arbre 31A, chaque outil 32 comportant un élément extérieur, c'est-à-dire une cage 33 et un élément intérieur de coupe, c'est-à-dire une scie 34.

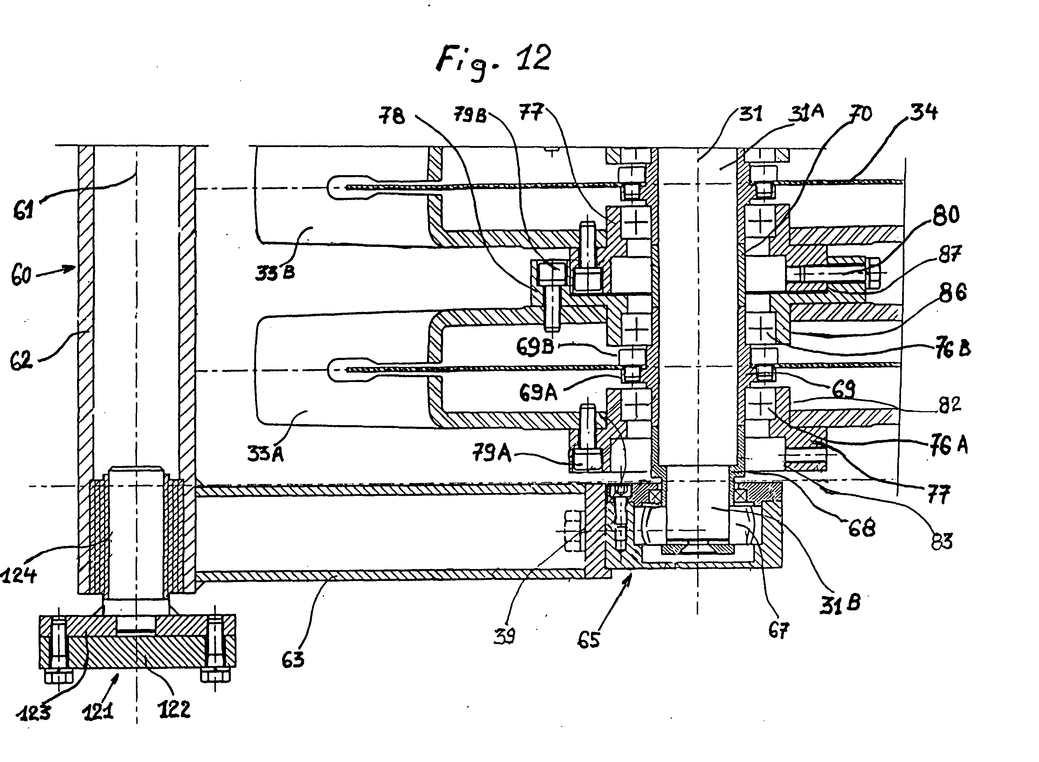

Le module de coupe est porté par un support 60 pivotable autour d'un axe 61 (Fig. 12). Seuls les bras de dessous 63 et de dessus 64 du support 60 sont représentés à la figure 5 (A la fig. 12 un montant 62 reliant ces deux bras est représenté partiellement).

Les cages sont soumises à un entraînement nouveau et original, décrit en détail plus loin : le couple d'entraînement est réglable et adaptable aux conditions de travail (types de taille, état des poteaux et du palissage, nature du terrain, etc.) grâce à un dispositif hydraulique de sécurité, par exemple par glissement. L'entraînement des cages est assuré par un moteur hydraulique 72 entraînant une couronne 74 par l'intermédiaire d'une courroie 75; celui des scies est assuré par un moteur 71. Les sens de rotation des cages et des scies sont symbolisés par les flèches Rc et Rs à la figure 6. Les deux moteurs 71, 72, sont fixés sur le bras 64 du support 60.

Le module ameneur ou d'alimentation 40 comprend un empilage d'outils-ameneurs 42 (ou ameneurs 42) sur un arbre 41A, ces outils 42 présentant chacun la forme de disque.

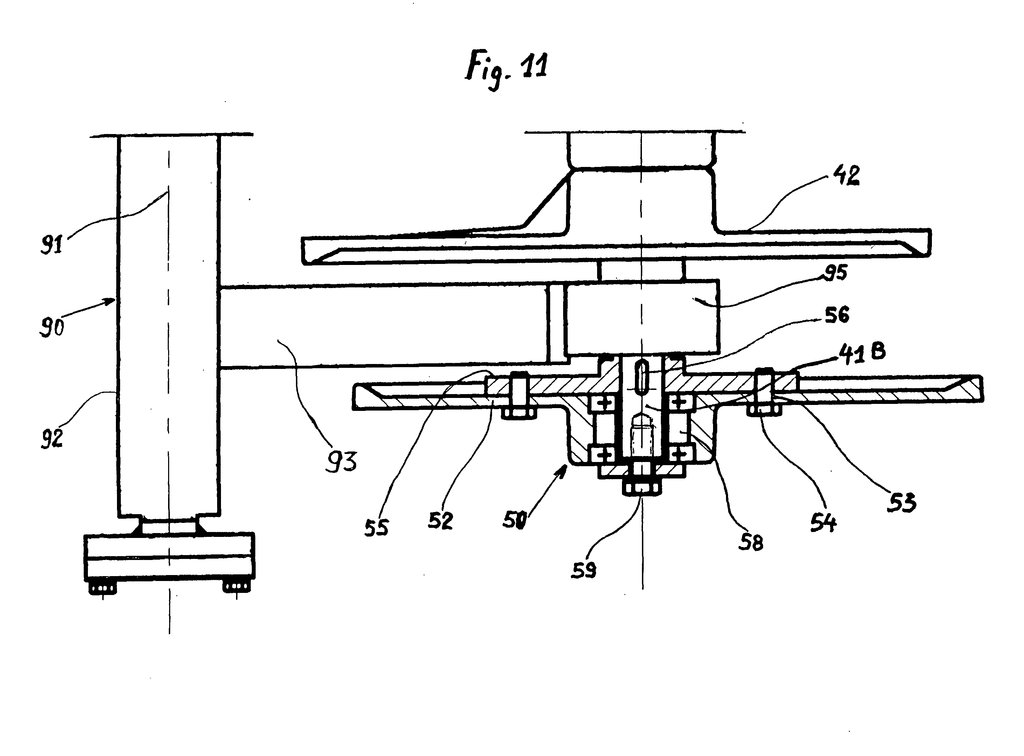

Le module ameneur 40 est porté par un support 90 pivotable autour d'un axe 91. Seuls les bras de dessous 93 et de dessus 94 sont représentés à la figure 5. (A la fig. 11, un montant 92 reliant les deux bras est partiellement représenté).

Les ameneurs 42 sont soumis à un entraînement en rotation soit de type classique, c'est-à-dire continu, soit de préférence de type analogue à celui prévu pour les cages. Selon l'exemple décrit, cet entraînement est assuré par un moteur hydraulique 100 fixé sur le bras 94 du support 90 ; le sens de rotation est symbolisé par la flèche Ra à la figure 6.

On observe que le module ameneur de base 40, formé par l'empilage des ameneurs entre les deux bras 93, 94, est complété par un dispositif 50 agencé de l'autre côté du bras 93. La description et la signification de ce dispositif seront données à l'appui de la Fig. 11

Les deux supports 60, 90 sont à leur tour reliés à un châssis en forme de "U" inversé, dont on voit la traverse horizontale supérieure 120 à la figure 6. Les longerons parallèles de ce châssis qui s'étendent parallèlement, l'un à proximité du montant 62 du support 60, l'autre à proximité du montant 92 du support 90, ne sont pas représentés.

Chacune des parties terminales des longerons parallèles du châssis est pourvue d'un dispositif de pivotement 121 connu en soi (Fig. 12). Il comprend une plaque 122 solidaire du châssis. A celle-ci est fixée une embase 123 pourvue d'un axe pivot 124, de manière à permettre le pivotement précité des supports 60, 90 autour de l'axe 61 et 91 respectivement.

Le pivotement des supports autour des axes 61, 91 permet aux modules, en cours de travail, de s'écarter de l'axe de travail W (Fig. 6) (correspondant essentiellement au rang de vignes dont la végétation est à prétailler/tailler), et de se rapprocher dudit axe W jusqu'à le dépasser, afin que les deux modules puissent interpénétrer l'un dans l'autre, comme représenté à la figure 5.

Les supports 60, 90, sont actionnés au moyen d'un dispositif 110 comportant un vérin double-effet 111 et un tirant 115, de façon à permettre ces mouvements d'ouverture (éloignement des modules par rapport à l'axe W) et de fermeture (rapprochement et, selon les cas, franchissement des modules de l'axe W).

Le vérin est relié par l'une de ses tiges 112 à la traverse 120 du châssis et par l'autre tige 113 au bras supérieur 64 du support 60 du module de coupe 30. A ce même bras 64 est reliée l'une des extrémités 117 du tirant 115, l'autre extrémité 116 du tirant étant reliée au bras supérieur 94 du support 90 du module ameneur 40. On comprend aisément à l'appui de la figure 6 que par exemple la fermeture du module de coupe 30 est provoquée par la poussée vers l'extérieur de la tige du vérin reliée au bras 64, poussée qui engendrera le déplacement vers l'extérieur de la partie 117 et, corrélativement, le rapprochement du module ameneur 40 vers l'axe W.

Chaque extrémité aussi bien du vérin 111 que du tirant 115 comporte une rotule et un dispositif de réglage de la longueur dudit vérin et dudit tirant, les rotules étant filetées sur une longueur. Rotules, filetages et moyens de blocage du réglage ne portent pas de références spécifiques. Ce dispositif connu en soi n'est symbolisé à la figure 6 que par la représentation d'écrous de blocage 118 sur le tirant 115. Ce réglage offre l'avantage de pouvoir adapter le rapprochement ou l'éloignement souhaité des modules de coupe 30 et ameneurs 40 de l'axe W, selon la densité de la végétation.

On observe à la figure 5, que le bord inférieur/supérieur d'un outil d'un module est séparé du bord supérieur/inférieur d'un outil correspondant de l'autre module, d'une distance moyenne référencée E Ce paramètre, intervenant dans la solution du problème posé, fera l'objet d'un commentaire ultérieurement.

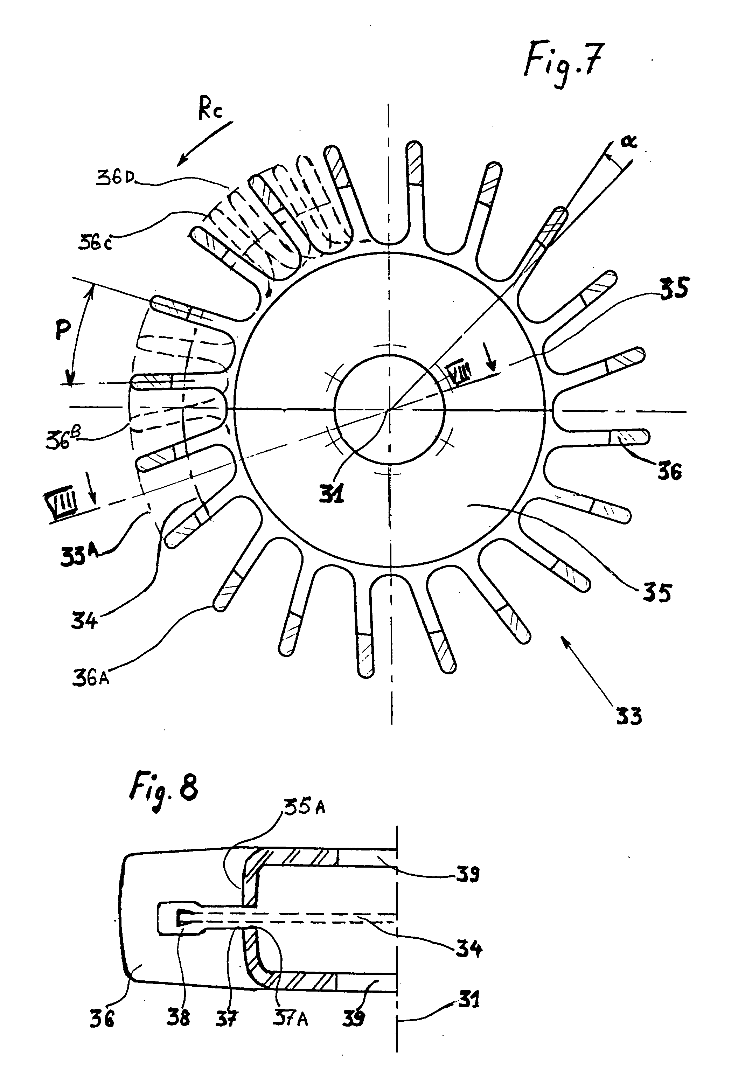

La figure 7 représente en coupe selon la ligne VII - VII de la figure 5 une cage circulaire 33 pourvue sur le dessous et le dessus d'ouvertures centrales 39 et équipant le module de coupe 30, cage dans laquelle est logée la scie 34 symbolisée sur cette figure par son contour en trait mixte. La figure 8 est une demi-coupe selon la ligne VIII - VIII de la figure 7. La cage 33 est formée de deux demi-coquilles 35 dont la ceinture 35A, s'étendant quasi-parallèlement à l'axe 31, présente une fente médiane axiale 37A et est prolongée de pales pleines 36. Ces pales peuvent être orientées radialement ou, de préférence, quasi-radialement. Elles sont relativement épaisses et leur extrémité 36A, vue en plan, est arrondie. Elles présentent une fente médiane 37 dans laquelle peut évoluer la scie 34, la zone terminale de ces fentes étant évasée. L'évasement 38 est prévu pour deux raisons : d'abord, laisser place à la voie (léger écartement alterné des dents) de la denture de la scie. Ensuite, pour une raison de sécurité, l'évasement évite tout risque d'endommagement des pales 36 et de la scie 34 elle-même lorsque, par exemple, pour cause de ravinement du sol, la végétation engagée dans la cage, c'est-à-dire entre les pales 36, agit sur la scie, au point que les flancs de celle-ci peuvent même toucher l'une ou l'autre des faces (non-spécifiquement référencées) des fentes 37.

On observe que les pales des cages sont décalées, par rapport à l'orientation radiale, d'un angle α dans le sens de rotation Rc. Cet angle favorise, dans un premier temps, la "prise" de la végétation, laquelle sera aussitôt sectionnée par les scies, puis dans un second temps, l'évacuation des sarments coupés, cela en combinaison avec une particularité concernant la relation entre les vitesses de rotation des cages et des ameneurs, élément fondamental de l'invention, ainsi qu'on l'expliquera plus loin.

Les pales d'une cage peuvent être décalées soit d'un demi-pas (le pas porte la référence P à la figure 7) par rapport aux pales des cages suivantes (pales 36B d'une cage adjacente), soit d'un tiers de pas (pales 36C d'une cage adjacente à celle représentée en trait plein et pales 36D d'une cage adjacente à la cage dont les pales sont référencées 36C). On préférera l'une ou l'autre des dispositions selon les sections des poteaux.

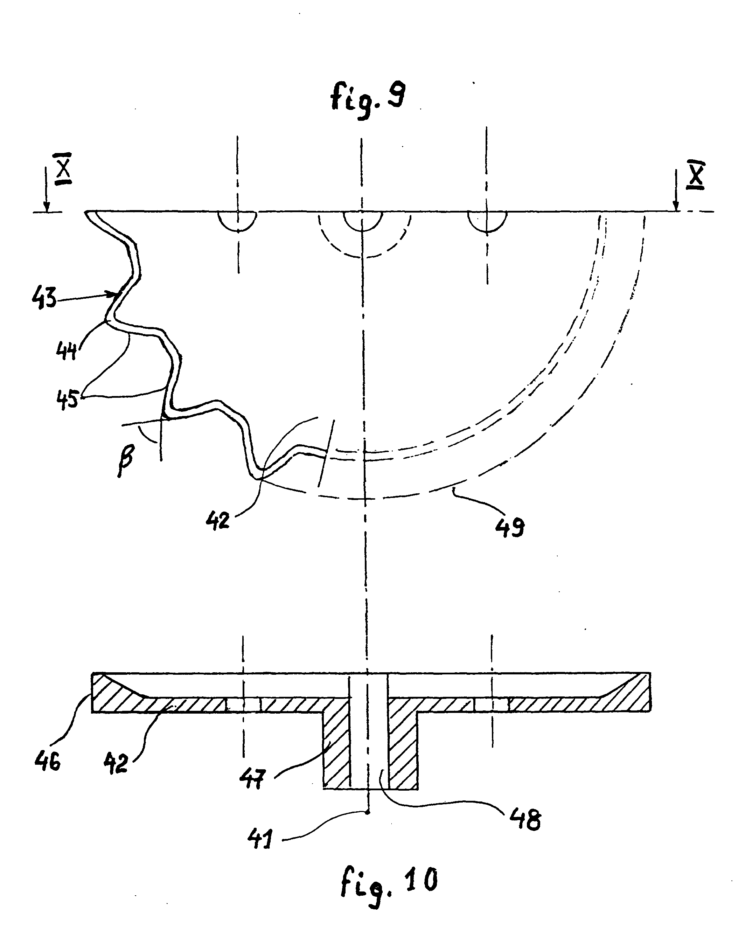

La figure 9 représente une demi-vue en plan de l'outil-ameneur 42 équipant le module 40, la figure 10 étant une demi-coupe selon la ligne X - X de la figure 9.

L'outil ameneur 42 présente la forme d'un disque comportant à la zone centrale un moyen 47 et un alésage 48, et à la périphérie, une denture périphérique 43 particulière en ce que cette denture présente un profil globalement semblable à celui d'un engrenage. Les flancs 45 des dents sont légèrement courbes, les sommets 44 sont arrondis et l'angle β est inférieur à 90° (avantageusement de l'ordre de 80°). L'épaisseur des dents (référence 46 à la Fig. 10) est relativement importante ; selon l'exemple, elle est d'environ 15 mm. Les bords 46 sont parallèles à l'axe de rotation 41. Ce profil présente l'avantage de combiner une certaine agressivité juste nécessaire et suffisante pour assurer une bonne saisie de la végétation, avec une capacité de "remplissage" suffisamment importante, tout en ne causant aucun dommage aux poteaux, tendeurs et fils, et de contribuer à une bonne évacuation des sarments coupés.

La figure 11 représente le dispositif inférieur 50 pouvant compléter le module ameneur de base 40 et comprenant un disque 52, analogue au disque 42, mais présente un alésage 58 plus grand que l'alésage 48 du disque 42, et des trous 53. Ce disque remplit une fonction de protection spécifique. Bien entendu, selon des variantes possibles, le disque 52 pourrait présenter un profil différent de celui d'un disque 42. On peut également envisager toute autre forme d'outil en lieu et place d'un disque 52. Ce dipositif fait l'objet de la demande de brevet européen EP - 95 440 049/0,696,417.

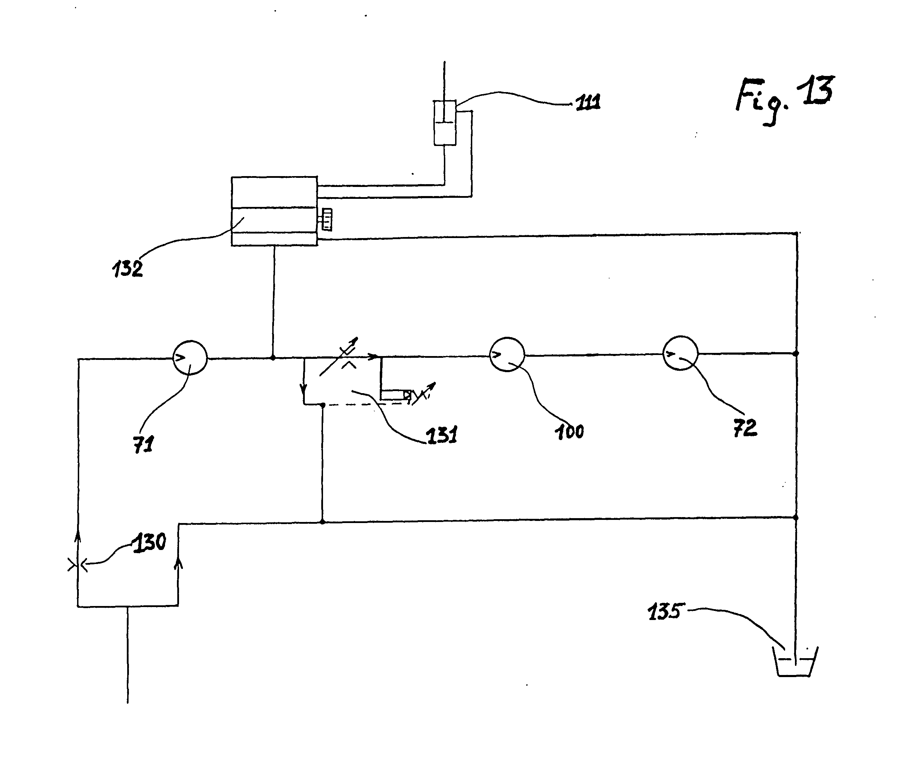

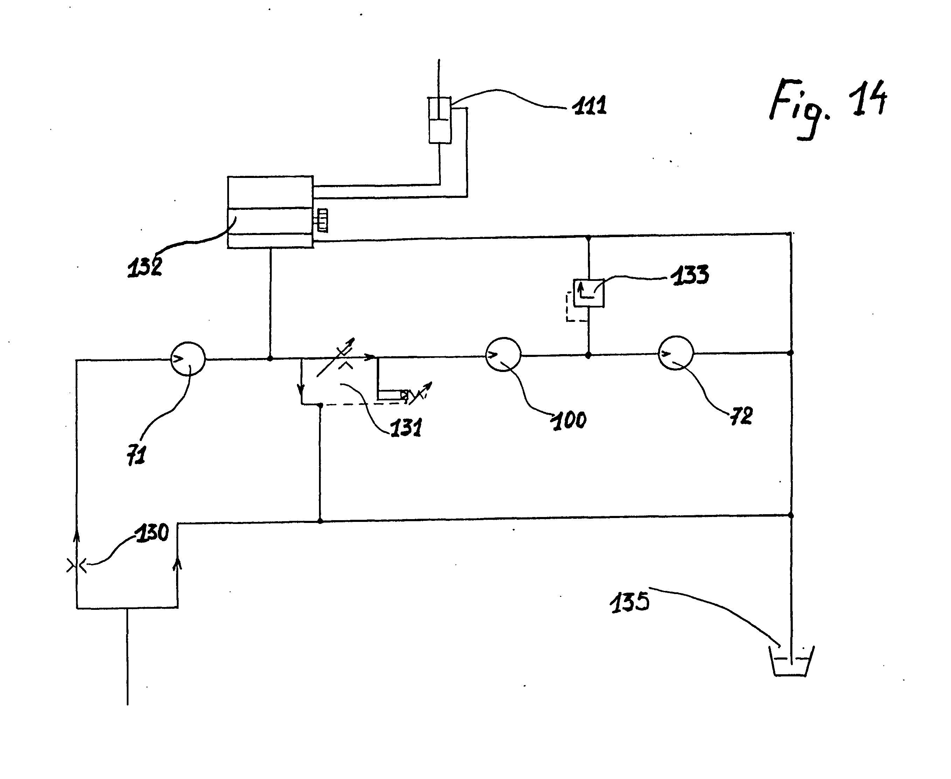

On va à présent expliquer les principes et modes de fonctionnement du module de coupe 30, du module-ameneurs 40 et des supports 60, 90 portant ces modules, en nous reportant aux deux formes d'exécution répondant, l'une au schéma de la figure 13, l'autre à celui de la figure 14.

Au moins les cages du module de coupe, de préférence également les ameneurs 42 du module 40, sont soumis à un entraînement à couple réglable, limité et adaptable aux conditions de travail (notamment densité de végétation, type de taille, vitesse d'avancement), conformément aux deux formes d'exécution des fig. 13 et 14. Pour réaliser ce type d'entraînement, l'homme du métier, une fois que sa réflexion l'a conduit à ce concept non évident, peut envisager différentes sortes de dispositifs tels que embrayages hydrauliques à friction, patinage de courroie (entraînement à "glissement"), ou encore embrayage à crabot, etc. Les figures 13 et 14 représentent des exécutions de circuits hydrauliques particulièrement avantageuses.

A la figure 13, les trois moteurs hydrauliques 71 (scies), 100 (ameneurs) et 72 (cages) sont branchés en série. Cette disposition permet de limiter chacun de ces moteurs à des pressions différentes et adaptées. Selon l'exemple, la séquence de cette série correspond à une demande de pression usuelle desdits moteurs dans un ordre essentiellement décroissant.

Les scies, reliées au moteur hydraulique 71, sont soumises à un entraînement en rotation à une vitesse qui restera constante pour un réglage donné, indépendamment de la vitesse d'avancement V_{A} de la prétailleuse, de sorte que lesdites scies vont, comme il se doit, effectuer toujours le même travail. A titre indicatif, une vitesse de rotation élevée, de l'ordre de 1500 t/min., permet d'obtenir des coupes de grande qualité, cela quelles que soient les sections des sarments à couper (sections qui peuvent dépasser, selon les régions ou pays, 15 mm. de diamètre). Selon les variantes, le moteur 71 est relié à un régulateur de débit variable que le conducteur pourra manoeuvrer ou à un régulateur de débit fixe 130, le conducteur étant alors libéré de toute manoeuvre. On sait que la pression usuelle de travail du moteur des scies est de l'ordre de 50 à 60 bars

En amont du moteur des ameneurs 100 est agencé un régulateur de débit avec limiteur de pression 131. Celui-ci permet de régler la pression totale admissible, c'est-à-dire le couple sur le moteurs des ameneurs et sur celui des cages, la somme admissible des pressions Pa et Pc sur lesdits ameneurs et lesdites cages respectivement, pouvant être choisie à l'intérieur d'une plage tarée (pour assurer un travail de qualité et sûr, donc sans dommages) s'étendant par exemple de 50 à 100 bars. Sur la prétailleuse selon l'invention, la pression usuelle de travail sur le moteur 100 est de l'ordre de 50 à 60 bars, sur le moteur 72 de l'ordre de 20 à 35 bars.

Le couple exercé sur les cages est moins élevé que celui exercé sur les ameneurs, essentiellement pour deux raisons.

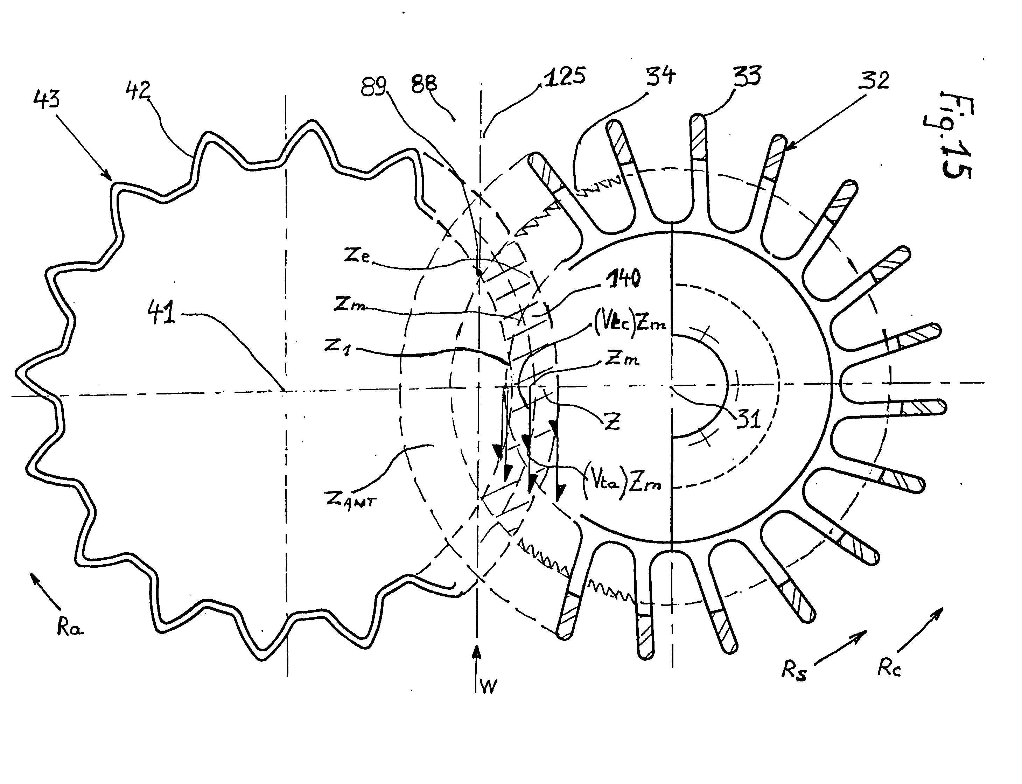

D'abord, les sarments, situés de part et d'autre du fil 125 (voir Fig. 15) dans une zone référencée 88 pour les besoins de l'explication, mais bien entendu, non délimitable avec précision, sont aussitôt sectionnés dès qu'ils entrent en contact avec les scies 34, de sorte que l'énergie nécessaire déployée par les cages 33 pour véhiculer ces sarments est minime, tandis que les ameneurs doivent saisir la végétation pour la conduire vers les outils de coupe 32 (cages 33 et scies 34), ce qui exige une énergie plus importante

Ensuite, comme on le verra plus loin, une autre caractéristique importante selon l'invention, consiste en ce que la vitesse de rotation des ameneurs est supérieure à celle des cages. Aussi, ces dernières vont-elles bénéficier d'un couple additionnel dû à la friction, fourni par les ameneurs et transmis auxdites cages par l'intermédiaire de la végétation.

Ainsi s'explique aussi la séquence préférée du branchement des deux moteurs 100 et 72 par rapport au moteur 71.

A la sortie du moteur des scies 71 sont branchés, en dérivation, le vérin 111 et un bloc réduction de pression réglable 132 commandant l'ouverture/fermeture dudit vérin. Le bloc réduction 132 est muni d'un limiteur de pression réglable, de sorte que la pression Pv sur le vérin peut être choisie dans une plage tarée (pour assurer la sécurité) pouvant aller jusqu'à une pression maximum Pvₘₐₓ (tarage allant par exemple de 12 à 100 bars). La valeur Pv choisie sera fonction des conditions dans lesquelles va évoluer la prétailleuse, notamment de la densité de végétation/type de taille.

L'agencement selon la figure 13 permet un contournement des poteaux avec un très grande sécurité, c'est-à-dire sans que des dommages auxdits poteaux soient à craindre. Ce contournement se fera soit automatiquement, soit sur commande.

En premier lieu, si, par exemple, le conducteur règle le régulateur 131 sur 60 bars et que le moteur 100 (ameneurs) "absorbe" 40 bars, tandis que le moteur 72 (cages) exige 20 bars, on est à la limite de la pression réglée (Pa + Pc = 60 bars), cages et ameneurs continueront à être entraînés. Supposons maintenant que le conducteur ait réglé le régulateur 131 sur 70 bars, que le moteur 100 "absorbe" 40 bars (Pa = 40 bars) et que les cages, évoluant jusque-là sous une pression de 20 bars, demandent brusquement, pour que le moteur 72 poursuive leur entraînement, une pression plus élevée, par exemple une demande de 35 bars à raison d'une rencontre avec un poteau. Cette demande va être satisfaite à hauteur de 30 bars seulement (Pc = 30 bars), la limite de la pression admissible de 70 bars étant ainsi atteinte ; le clapet (non référencé) du régulateur 131 va s'ouvrir, cela aussi longtemps que la "demande" dépassera 30 bars (en supposant que les ameneurs continuent de travailler sous 40 bars), et l'huile sera évacuée dans le réservoir 135. On dit qu'un moteur "glisse", on parle également "d'entraînement à glissement", et tout se passe comme si le module des cages - plus précisément les cages uniquement de ce module - et le module des ameneurs, qui vont rouler sur la végétation en épousant et adoptant la vitesse d'avancement V_{A} de la prétailleuse, étaient libres en rotation. En l'absence de limiteur de couple, on aurait au contraire assisté à une éventuelle destruction du poteau à cause du couple d'entraînement trop élevé du moteur des cages, puisque la demande de 35 bars aurait été satisfaite. On comprend que le choix de la valeur limite du couple précité à ne pas dépasser sera arrêté par l'opérateur en fonction des conditions en face desquelles il est placé (par exemple selon le type de taille, l'état des poteaux, l'état du palissage etc.). Observons que pendant le laps de temps au cours duquel les moteurs "glissent", l'opération de coupe n'est pas, elle, interrompue, bien au contraire. A moins que le conducteur ne la stoppe volontairement en manoeuvrant le moyen 130, elle se poursuit, le régime d'entraînement des moteurs des scies étant différent et indépendant de celui des cages et ameneurs.

En second lieu, quant au contournement, toujours à titre d'illustration, dans l'hypothèse de travail en type guyot (végétation faible à moyenne/sarments souples), la valeur Pv d'utilisation est relativement faible, de même que Pa, Pc, de l'ordre respectivement 30 bars, 35 bars, 15 bars). Au passage, c'est-à-dire à la rencontre d'un poteau, opposant par définition une résistance plus grande que la végétation, le contact des modules ameneurs/cages contre ledit poteau entraînera une augmentation de la pression sur le circuit du vérin 111. Or, l'opérateur aura pris soin de régler ou d'afficher cette pression Pv au moyen du bloc 132 de telle sorte que celle-ci reste toujours inférieure ou au plus égale à la poussée exercée sur lesdits modules. Grâce à cette adaptation et cet équilibre, les modules vont pouvoir contourner tout obstacle (ouverture) en particulier le poteau en roulant sur lui sans le blesser, Cela automatiquement, c'est-à-dire sans que l'opérateur soit dans l'obligation d'actionner manuellement le bloc 132.

En revanche, en type cordon de Royat (végétation dense/sarments rigides, hauteur de coupe importante), les valeurs d'utilisation Pv ainsi que Pa, Pc, sont très élevées, en tous les cas sensiblement plus importantes qu'en type de taille guyot (de l'ordre respectivement 60 bars, 60 bars, 35 bars). Au passage du poteau, le conducteur devra, là, actionner lui-même la commande électrique (bloc 132) d'ouverture/fermeture. Toutefois, les risques d'endommagement du poteau sont quasi-nulles, même dans l'hypothèse où le conducteur, par exemple à cause d'un détournement d'attention, aurait omis d'actionner à temps la commande 132 du vérin 111, cela grâce au réglage adapté et séparé de Pv d'une part, de Pa et Pc d'autre part, que permet l'agencement selon la figure 13.

L'agencement selon la figure 14 est analogue à celui de la figure 13, à la différence cependant qu'un limiteur de pression 133 est disposé en amont du moteur des cages 72. Ainsi les trois circuits, celui du vérin, des ameneurs et des cages sont pourvus d'une sécurité autonome, en ce sens que la pression Pc est réglable , à l'intérieur d'une plage tarée s'étendant par exemple de 5 à 40 bars, indépendamment non seulement de Pv mais aussi de Pa. L'adoption de cette forme d'agencement est particulièrement intéressante pour les prétailleuses appelées à évoluer en type de taille cordon, celles-ci étant équipées alors de modules comportant un grand nombre d'outils empilés (une dizaine par module par exemple). L'agencement selon la figure 14 permet d'écarter totalement les risques résiduels, Pv, Pa et Pc pouvant être réglés de façon autonome. Il assure de ce fait une protection des cages et du poteau à toute épreuve. Une poussée même faible exercée sur une cage par un quelconque obstacle, aura pour effet de faire rouler cette cage, donc le module, la pression Pc ayant pu être réglée à une valeur relativement faible, inférieure ou au plus égale à Pa.

A titre d'exemple, en admettant que le limiteur 131 soit réglé à 75 bars et que le limiteur 133 le soit à 35 bars, si la pression sur le moteur 100 (ameneurs) est de 40 bars et que la pression "appelée" par le moteur 72 soit de 40 bars également, le clapet du limiteur 133 s'ouvrira, de sorte que Pc reste au plus égale à 35 bars, tandis que le clapet (non référencé) du limiteur 131 restera fermé : seul le moteur 72 "glisse", ce qui augmente considérablement la sécurité de travail. Les contraintes sur les poteaux, tendeurs, fils, exercées par les cages étant, d'habitude, sensiblement plus importantes que celles provoquées par les ameneurs, on comprend que le fait de pouvoir limiter le couple du moteur des cages de façon autonome, comme le permet le branchement selon la figure 14, constitue un avantage considérable.

Selon une autre forme d'exécution (non représentée par une figure), les moteurs 100 et 72 pourraient être branchés en parallèle, en aval du moteur 71. Entre la sortie du moteur 71 et la dérivation des moteurs 100 et 72 serait agencé le dispositif 131 ou un dispositif analogue, puis, au point de dérivation, un diviseur de débit alimentant séparément lesdits moteurs 100 et 72. En amont de chacun de ces derniers, on peut prévoir un limiteur de pression spécifique, de manière à limiter de façon autonome le couple sur chacun de ces moteurs. Cette forme d'exécution nécessite toutefois un élément supplémentaire (diviseur de débit au point de dérivation) et une quantité d'huile double. On lui préférera donc le branchement en série explicité plus haut.

Ainsi qu'on l'a dit en introduction, la tête de coupe peut être composée, selon une variante d'exécution, de deux modules de coupe 30 identiques ou quasi-identiques (on maintiendra toutefois ici, aux fins de simplicité, les mêmes références pour le deuxième module de coupe et pour les éléments y relatifs). C'est dire qu'au moins les cages 33 d'un module de coupe 30 reliées à un moteur 72, de préférence également les cages 33 de l'autre module de coupe 30 reliées à un autre moteur 72 sont soumis à un entraînement glissant, donc non continu, plus précisément à un entraînement à couple réglable, limité et adaptable. Dans ce cas, les branchements des moteurs et les tarages se feront de façon analogue à ceux venant d'être décrits en détail, ce que l'homme du métier fera aisément au vu des explications fournies plus haut. Ainsi, on aura la séquence suivante (série) : réservoir, limiteur 130, moteur 71 des organes de coupe 34 du premier module de coupe 30, moteur 71 des organes de coupe 34 du second module 30, limiteur 131, moteur 72 des cages du premier module 30, limiteur 133, moteur 72 des cages du second module 30. La variante de branchement parallèle des moteurs 72 par rapport aux moteurs 71 et dispositifs 130, 131, 133, selon cette variante d'exécution, se déduit aisément par analogie à partir des explications à l'appui de la forme d'exécution décrite en détail. Aussi les schémas de branchement selon cette variante à deux modules de coupe 30 ne sont-ils pas représentés graphiquement

Si le dispositif portant sur l'entraînement glissant permet d'éviter tout dommage aux poteaux, tendeurs, fils de palissage et aux outils mêmes, le problème du nettoyage des fils, c'est-à-dire celui consistant à tirer et évacuer hors des fils supérieurs le grand nombre de sarments coupés mais restant fortement ancrés auxdits fils par des vrilles, demeure encore.

Selon l'invention, ce problème est résolu, à titre principal, par un choix particulier des vitesses des cages et des ameneurs et, à titre plus subsidiaire ou complémentaire, par la définition d'un paramètre mettant en relation l'espace E (cf Fig. 5) en phase d'interpénétration.

On se reportera plus particulièrement, pour les explications qui vont suivre, à la figure 15.

Quant à la solution principale, il s'agit de concilier deux conditions.

La première, condition-cadre connue et appliquée sur toute les machines de coupe du domaine considéré, notamment du genre prétailleuse, porte sur la composante tangentielle de la vitesse de rotation des outils de chaque module (cages et ameneurs). Cette composante doit être, à la périphérie ou du moins dans la zone périphérique, égale à la vitesse d'avancement V_{A} de la prétailleuse. Si (Vt_{c})ₚ est la composante tangentielle de la vitesse de rotation des cages à leur périphérie (extrémités ou zones proches des extrémités des pales 36, cf Fig. 7 et 8) et si (Vtₐ)ₚ est la composante tangentielle de la vitesse de rotation des ameneurs à leur périphérie 49 (ou dans la zone proche, cf Fig. 9), cette condition cadre se traduit par l'égalité au moins approximative (Vt_{c})ₚ≅(Vtₐ)ₚ≅V_{A}.

Cette relation contribue à une bonne alimentation de l'outil de coupe 32 (but également visé avec la conformation de l'ameneur de l'outil de coupe 42), au respect des poteaux (but obtenu en premier lieu grâce au couple réglable expliqué plus haut), et à éviter l'arrachage des sarments, ainsi qu'à préserver ceux non-destinés à être coupés.

La seconde condition est celle que l'inventeur a enregistrée après de nombreuses expériences et observations.

Notons liminairement qu'aux points ou endroits 89, points d'intersection des scies 34, de la base des dents 43 des ameneurs 42 et du fil 125 (ce dernier confondu approximativement avec l'axe de travail W), les sarments sont tous sectionnés (bien entendu, on aperçoit à la figure 15, qui est une vue de dessus, qu'un seul point ou une seule zone 89). Il s'agit donc, à partir de cet endroit de dégager ou tirer hors des fils (essentiellement le fil supérieur ou les deux ou trois fils supérieurs) tous ceux des sarments qui y restent accrochés par leurs vrilles.

Pour que soit effectuée cette opération de tirage, il est primordial que règne, au moins une zone 140 - cf aussi espace Z de la figure 5 - non pas une égalité entre les vitesses tangentielles respectives définies ci-dessous, mais au contraire une inégalité. Sur les figures 5 et 15, la zone Z est symbolisée par une représentation hachurée, étant entendu que les enveloppes ou limites extérieures Zₑ et intérieures Zᵢ de cet espace ou de la zone 140, sont très grossières (la profondeur de l'espace Z étant délimitée très approximativement par la longueur des dents des ameneurs 42). Remarquons que sur les machines connues, le tirage des sarments s'effectue de part et d'autre du fil supérieur 125, c'est-à-dire alternativement aussi bien dans la zone Z que dans la zone Z_{ANT} (voir figure 15) symétrique à la zone Z par rapport au fil 125. Selon l'invention, l'opération de tirage des sarments est essentiellement localisée en Z, pour la raison qui sera donnée plus loin.

Par souci de simplification, l'examen sera limité à cet espace Z, ou plus précisément Zₘ, c'est-à-dire à l'enveloppe médiane entre Zₑ et Zᵢ (ou espace directement voisinant de cette enveloppe Zₘ).

Si (Vt_{c})_{Zm} est la composante tangentielle en Zm de la vitesse de rotation des cages et (Vtₐ)_{Zm} la composante tangentielle en Zm de la vitesse de rotation des ameneurs, ladite condition d'inégalité se traduit par (Vtₐ)_{Zm} > (Vt_{c})_{Zm} (plus généralement (Vtₐ)_{Z} > (Vt_{c})_{Z} ou (Vtₐ)₁₄₀ > (Vt_{c})₁₄₀).

C'est-à-dire que cette inégalité doit être observée en tous points au moins de la zone ou espace Z, respectivement 140 (cf Fig 15 et 5).

Pour obtenir l'inégalité ci-dessus, tout en respectant l'égalité selon la condition cadre, on peut jouer sur les vitesses de rotation ou vitesses angulaires des cages (Vr_{c}) et des ameneurs (Vrₐ), ou/et sur la géométrie de ces organes, plus précisément sur le diamètre de chacun d'eux.

Les circuits aussi bien selon la figure 13 que 14 permettent, grâce au régulateur-limiteur 131, de régler et/ou varier Vr_{c} et Vrₐ. La sortie du moteur 100 alimentant le moteur 72 des cages, le rapport de ces vitesses angulaires sera constant (même débit d'huile) soit Vr_{c} / Vrₐ = Δ.

Selon l'exemple décrit, ce rapport est inférieur à 1, tandis que le diamètre extérieur d'un ameneur est inférieur au diamètre d'une cage, de sorte que l'on ait toujours, dans la zone Z, (Vt_{c}/Vtₐ)_{Z} ou (Vtₐ-Vt_{c} / Vtₐ)_{Z} constant (le diamètre extérieur d'un ameneur étant égal, selon l'exemple, à 90% environ de celui d'une cage).

A titre d'illustration, selon l'invention, le rapport (Vtₐ - Vt_{c} / Vtₐ )_{Zm}, inférieur à 1, c'est-à-dire en Zm, est d'environ 0,35. Il est de l'ordre de 0,25 en Zi et de l'ordre de 0,50 en Ze.

En adoptant la forme d'exécution à deux modules de coupe 30 identiques ou quasi-identiques l'un à l'autre (sans que l'on fasse état, ici, de références différentes), on aurait alors en lieu et place de Vrₐ ou Vtₐ les vitesses Vr_{c}' ou Vt_{c}' respectivement. Dans cette forme d'exécution, les valeurs des rapports (Vt_{c} ou Vt_{c}')_{Z} ou (Vt_{c}' - Vt_{c} / Vt_{c}')_{Z} seront plutôt plus grands, c'est-à-dire que le rapport Vt_{c} / Vt_{c}' (inférieur à 1) s'éloignera moins de 1 en comparaison avec la forme d'exécution avec module de coupe 30 / module-ameneur 40, puisque l'on tendra à utiliser sur chacun des modules de coupe les mêmes outils, c'est-à-dire les mêmes cages, de même diamètre, même si la possibilité de choix des cages de diamètre différent selon le module de coupe existe.

Quant à la solution subsidiaire (en ce sens qu'elle peut être considérée et adoptée en tant que telle, donc isolément, sans pourtant être, à elle seule, idéale), ou complémentaire (en ce sens qu'elle peut contribuer à la qualité du résultat (en l'améliorant) atteint par les moyens que l'on vient d'exposer à propos des vitesses relatives cages/ameneurs, donc de l'opération de tirage des sarments hors des fils), elle revient à considérer la grandeur du paramètre_E évoqué à l'appui des explications de la Fig. 5 (distance entre la face inférieure/supérieure d'un outil d'un module et la face supérieure/inférieure d'un outil correspondant de l'autre module en phase d'interpénétration). Ce paramètre ne doit pas être choisi de façon plus ou moins arbitraire.

Dans les machines de coupe de l'art antérieur, les sarments coupés sont, du fait de l'interpénétration, poussés, c'est-à-dire véhiculés en direction de l'axe de l'un et de l'autre module alternativement, cela parce que le paramètre E est trop important.

Sur les machines connues commentées en introduction, le paramètre E est de l'ordre de 16 mm. (EP. 0, 147, 344) ou de 12 mm. (FR 91.14502). On comprend aisément - cela d'autant plus lorsque, comme sur ces antériorités, les composantes tangentielles des vitesses de rotation des outils dans la zone d'évacuation sont pratiquement identiques, que seule une très faible partie des sarments coupés sera effectivement extraite des fils. Quant à la contribution de l'interpénétration au tirage des sarments, elle est d'autant plus faible et aléatoire que E est grand.

C'est pourquoi, selon l'invention, la machine de coupe, qu'elle comporte une tête de coupe avec deux modules de coupe identiques ou quasi-identiques équipés chacun d'outils de coupe (cages abritant, chacune, un organe de coupe), ou une tête de coupe présentant, comme celle décrite ici à titre d'exemple, un module de coupe et un module d'outils-ameneurs, se caractérise par le fait qu'en phase d'interpénétration, l'écart E entre la face supérieure/inférieure de la cage d'un module et une face inférieure/supérieure de la cage ou de l'ameneur correspondant(e) de l'autre module est inférieur à 12 mm.
Plus avantageusement, la machine de coupe selon l'invention est caractérisée en ce que l'écart_E existant en phase d'interpénétration entre la face supérieure/inférieure d'une cage déterminée du module de coupe et la face inférieure/supérieure d'une cage ou d'un ameneur correspondant sera de préférence, de l'ordre de 7 à 9 mm.

De fait, les expériences ont montré que la valeur optimale E se situe autour de 8 mm.. En fixant E à cette valeur, et compte tenu de l'épaisseur des dents des ameneurs 42 (référence 46 sur la Fig. 10) les sarments coupés et "vrillés" vont évoluer principalement que dans la zone 140, donc du côté de l'axe 31 exclusivement (et non 41) (Fig. 15). Ainsi, les quelques sarments qui, en dépit de la solution principale venant d'être décrite et concernant les vitesses tangentielles, resteraient éventuellement accrochés aux fils, seront dégagés grâce à cette action complémentaire.

Aussi, le problème de nettoyage des fils est-il véritablement résolu, cela avec une grande perfection.

On comprend à l'appui de l'illustration plus haut que les avantages de ces modes d'entraînement et d'actionnement des modules et du vérin sont considérables. Lorsque les couples préalablement réglés grâce à une sélection adéquate des pressions Pa, Pc en fonction des conditions de travail sont atteints, soit en raison de la présence de poteaux, de tendeurs, d'enchevêtrement de la végétation dans le palissage, ou de tout autre obstacle, et la prétailleuse continuant d'avancer, en d'autres termes lorsque ces couples sont, de par ces faits, neutralisés, cages et ameneurs se dégagent aisément desdits obstacles en roulant dessus, grâce au "glissement" des entraînements : tout endommagement, aussi bien, en particulier, du poteau, que des outils équipant les modules est écarté avec le maximum de sécurité.

On comprend également que ces phases se déroulent "en douceur" à un double titre. D'une part, la prétailleuse ne subit aucun choc brutal, ce qui constitue un garant de la fiabilité et de la longévité de celle-ci quelles que soient l'intensité et les conditions d'utilisation. D'autre part, poteaux et palissage ne sont pas, comme dans le cas de EP-0,147,344, en contact avec des lames ou contre-lames exerçant la coupe, de surcroît soumises à un entraînement continuellement forcé.

Pv, valeur de la pression admissible sur le vérin, est également choisie et réglée en fonction de la densité de végétation ; là aussi les supports des modules s'ouvrent lorsque la poussée exercée sur eux dépasse ladite valeur.

Du fait de l'instauration d'une inégalité des vitesses tangentielles Vtₐ et Vt_{c} entre cages et ameneurs dans une zone Z lors de l'interpénétration, le rapport Vtₐ / Vt_{c} étant toujours constant, le tirage des sarments coupés hors des fils est parfaitement assuré, cela tout en préservant les coursons lorsque la machine est mise en oeuvre dans les vignes présentant une taille en cordon grâce au dispositif 50. Est également assurée une coupe de qualité, toujours égale, cela quelles que soient les conditions d'utilisation de la machine selon l'invention, en particulier lorsque la vitesse d'avancement est lente, en raison par exemple d'un relief du sol accidenté, la vitesse de rotation des scies effectuant la coupe restant constante et indépendante de cette vitesse d'avancement

## Revendications

1. Machine de coupe utilisable notamment pour la taille ou prétaille de vignes palissées et comprenant au moins une tête de coupe présentant chacune deux modules, l'un étant un module de coupe (30) comportant une pluralité d'outils de coupe (32) superposés et disposés autour d'un arbre (31A) d'axe (31), l'autre module étant, soit un autre module de coupe (30) comportant une pluralité d'outils de coupe superposés, soit un module-ameneur (40) comportant une pluralité d'outils-ameneurs (42) superposés et disposés autour d'un arbre (41A) d'axe (41), chaque empilage d'outils d'un module étant agencé dans un support pivotable autour d'un axe parallèle à l'axe du module, chaque outil de coupe comportant un élément extérieur en forme de cage ayant une aptitude à un mouvement de rotation et un élément intérieur logé dans ladite cage, cet élément intérieur étant formé d'un organe de coupe (34) indépendant et entraîné en rotation par un moteur (71), chaque outil-ameneur présentant la forme d'un disque à denture périphérique et ayant une aptitude à un mouvement de rotation, les cages, d'une part, et les outils-ameneurs, d'autre part, étant solidaires entre elles/eux, et les outils d'un module pouvant interpénétrer dans des espaces correspondants ménagés entre les outils de l'autre module grâce à l'action d'au moins un vérin ou moyens équivalents, caractérisée en ce qu'en phase d'interpénétration, au moins dans un espace Z ou (140), les composantes tangentielles de la vitesse de rotation des ameneurs Vtₐ du module-ameneur (40) sont supérieures aux composantes tangentielles de la vitesse de rotation des cages Vt_{c} du module de coupe (30), ou que les composantes tangentielles de la vitesse de rotation des cages Vt_{c}' d'un module de coupe (30) sont supérieures aux composantes tangentielles de la vitesse de rotation des cages Vt_{c} de l'autre module de coupe (30).

2. Machine de coupe selon la revendication 1, caractérisée en ce que les composantes tangentielles des vitesses de rotation, soit des ameneurs Vtₐ du module (40) et des cages Vt_{c} du module (30), soit des cages Vt_{c}' d'un module (30) et des cages Vt_{c} de l'autre module (30), sont, à la périphérie desdits ameneurs et desdites cages, approximativement égales à la vitesse d'avancement V_{A} de la machine.

3. Machine de coupe selon la revendication 1 ou 2, caractérisée en ce qu'au moins dans ledit espace Z, le rapport Vt_{c} / Vtₐ est constant et que le rapport moyen (Vtₐ - Vt_{c} / Vtₐ )_{Zm} est inférieur à 1 et de préférence de l'ordre de 0,35, ou que le rapport Vt_{c} / Vt_{c}' est constant et que le rapport moyen (Vt_{c}' - Vt_{c} / Vt_{c}')_{Zm} est inférieur à 1.

4. Machine de coupe selon la revendication 1, 2 ou 3, caractérisée en ce que, soit les vitesses de rotation angulaires Vr_{c} des cages du module (30) et Vrₐ des ameneurs du module (40), soit les vitesses de rotation angulaires Vr_{c} des cages d'un module (30) et Vr_{c}' des cages de l'autre module (30) sont réglables au moyen d'un dispositif (131) et que le rapport Δ = Vr_{c} / Vrₐ ou Δ = Vr_{c} / Vr_{c}' est constant.

5. Machine de coupe selon la revendication 4, caractérisée en ce que le rapport Δ est inférieur à 1,0.

6. Machine de coupe utilisable notamment pour la taille ou prétaille de vignes palissées et comprenant au moins une tête de coupe présentant chacune deux modules, l'un étant un module de coupe (30) comportant une pluralité d'outils de coupe (32) superposés et disposés autour d'un arbre (31A) d'axe (31), l'autre module étant, soit un autre module de coupe (30) comportant une pluralité d'outils de coupe superposés, soit un module-ameneur (40) comportant une pluralité d'outils-ameneurs (42) superposés et disposés autour d'un arbre (41A) d'axe (41), chaque empilage d'outils d'un module étant agencé dans un support pivotable autour d'un axe parallèle à l'axe du module, chaque outil de coupe comportant un élément extérieur en forme de cage ayant une aptitude à un mouvement de rotation et un élément intérieur logé dans ladite cage, cet élément intérieur étant formé d'un organe de coupe (34) indépendant et entraîné en rotation par un moteur (71), chaque outil-ameneur présentant la forme d'un disque à denture périphérique et ayant une aptitude à un mouvement de rotation, et les cages, d'une part, et les outils-ameneurs, d'autre part, étant solidaires entre elles/eux, les outils d'un module pouvant interpénétrer dans des espaces correspondants ménagés entre les outils de l'autre module grâce à l'action d'au moins un vérin ou moyens équivalents, caractérisée en ce qu'en phase d'interpénétration l'écart E entre une face supérieure/inférieure d'une cage d'un module et une face inférieure/supérieure d'une cage ou d'un ameneur correspondant de l'autre module est inférieure à 16 mm.

7. Machine de coupe selon la revendication 6, caractérisée en ce que l'écart E est inférieur à 12 mm et. de préférence, de l'ordre de 7 à 9 mm.

8. Machine de coupe selon l'une des revendications 1 à 5, caractérisée en ce qu'elle présente les caractéristiques de la revendication 6 ou 7.

## Patentansprüche

1. Schneidmaschine, insbesondere zum Beschneiden und Vorbeschneiden von anspalierten Weinreben mit mindestens einem Schneidkopf, von denen jeder zwei Module aufweist, wobei das eine Modul ein Schneidmodul (30) mit mehreren übereinander gelagerten Schneidwerkzeugen (32) ist, die um eine Welle (31A) mit der Achse (31) angeordnet sind, und das andere Modul entweder ein anderes Schneidmodul (30) mit mehreren übereinander gelagerten Schneidwerkzeugen oder ein Zuleitungsmodul (40) ist, das mehrere übereinander gelagerte Zuleitungswerkzeuge (42) umfasst, die um eine Welle (41A) mit der Achse (41) angeordnet sind, wobei jede Werkzeugaufstapelung eines Moduls in einem Träger angeordnet ist, der um eine Achse schwenkbar ist, die parallel zur Achse des Moduls verläuft, und wobei jedes Schneidwerkzeug ein äußeres Element in Form eines Käfigs aufweist, das sich rotierend bewegen kann, und ein inneres Element, das in dem besagten Käfig untergebracht ist, wobei dieses innere Element aus einem unabhängig Schneidorgan (34) besteht, das von einem Motor (71) rotationsangetrieben wird, wobei jedes Zuleitungswerkzeug die Form einer Scheibe mit Zähnen an ihrem Umfang aufweist, die sich rotierend bewegen kann, wobei die Käfige einerseits und die Zuleitungswerkzeuge andererseits jeweils miteinander verbunden sind und die Werkzeuge eines Moduls in entsprechende Räume zwischen den Werkzeugen des anderen Moduls dank der Wirkung mindestens eines Zylinders oder gleichwertiger Mittel eindringen können, wobei die Wirkung dadurch gekennzeichnet ist, dass die tangentialen Drehzahlkomponenten der Zuleiter Vtₐ des Zuleitungsmoduls (40) in der Eindringungsphase mindestens in einem Raum Z bzw. (140) größer sind als die tangentialen Drehzahlkomponenten Vt_{c} des Schneidmoduls (30), oder dass die tangentialen Drehzahlkomponenten der Käfige Vt_{c}' eines Schneidmoduls (30) größer sind als die tangentialen Drehzahlkomponenten der Käfige Vt_{c} des anderen Schneidmoduls (30).

2. Schneidmaschine nach dem Anspruch 1, dadurch gekennzeichnet, dass die tangentialen Drehzahlkomponenten entweder der Zuleiter Vtₐ des Moduls (40) und der Käfige Vt_{c} des Moduls (30) oder der Käfige Vt_{c}' eines Moduls (30) und der Käfige Vt_{c} des anderen Moduls (30) am Umfang der besagten Zuleiter und der besagten Käfige annähernd der Vorschubgeschwindigkeit V_{A} der Maschine entsprechen.

3. Schneidmaschine nach dem Anspruch 1 oder 2, dadurch gekennzeichnet, dass, mindestens in dem besagten Raum Z, das Verhältnis Vt_{c}/Vtₐ konstant ist und dass das durchschnittliche Verhältnis (Vtₐ - Vt_{c}/Vtₐ)Zₘ kleiner 1 ist, vorzugsweise in der Größenordnung von 0,35, oder dass das Verhältnis Vt_{c}/Vt_{c}' konstant ist und das durchschnittliche Verhältnis (Vt_{c}'- Vt_{c}/Vt_{c}')zₘ kleiner 1 ist.

4. Schneidmaschine nach Anspruch 1, 2 oder 3, dadurch gekennzeichnet, dass entweder die Winkeldrehgeschwindigkeit Vr_{c} der Käfige des Moduls (30) und Vrₐ der Zuleiter des Moduls (40) oder die Winkeldrehgeschwindigkeit Vr_{c} der Käfige eines Moduls (30) und Vrc' der Käfige des anderen Moduls (30) über die Vorrichtung (131) einstellbar sind, und dass das Verhältnis Δ = Vr_{c}/Vrₐ oder Δ = Vr_{c}/Vr_{c}' konstant ist.

5. Schneidmaschine nach dem Anspruch 4, dadurch gekennzeichnet, dass das Verhältnis Δ kleiner 1,0 ist.

6. Schneidmaschine, insbesondere zum Beschneiden und Vorbeschneiden von anspalierten Weinreben mit mindestens einem Schneidkopf, von denen jeder zwei Module aufweist, wobei das eine Modul ein Schneidmodul (30) mit mehreren übereinander gelagerten Schneidwerkzeugen (32) ist, die um eine Welle (31A) mit der Achse (31) angeordnet sind, und das andere Modul entweder ein anderes Schneidmodul (30) mit mehreren übereinander gelagerten Schneidwerkzeugen oder ein Zuleitungsmodul (40) ist, das mehrere übereinander gelagerte Zuleitungswerkzeuge (42) umfasst, die um eine Welle (41A) mit der Achse (41) angeordnet sind, wobei jede Werkzeugaufstapelung eines Moduls in einem Träger angeordnet ist, der um eine Achse schwenkbar ist, die parallel zur Achse des Moduls verläuft, und wobei jedes Schneidwerkzeug ein äußeres Element in Form eines Käfigs aufweist, das sich rotierend bewegen kann, und ein inneres Element, das in dem besagten Käfig untergebracht ist, wobei dieses innere Element aus einem unabhängig Schneidorgan (34) besteht, das von einem Motor (71) rotationsangetrieben wird, wobei jedes Zuleitungswerkzeug die Form einer Scheibe mit Zähnen an ihrem Umfang aufweist, die sich rotierend bewegen kann, wobei die Käfige einerseits und die Zuleitungswerkzeuge andererseits jeweils miteinander verbunden sind und die Werkzeuge eines Moduls in entsprechende Räume zwischen den Werkzeugen des anderen Moduls dank der Wirkung mindestens eines Zylinders oder gleichwertiger Mittel eindringen können, wobei die Wirkung dadurch gekennzeichnet ist, dass der Abstand E zwischen einer oberen/unteren Fläche eines Käfigs eines Moduls und der unteren/oberen Fläche eines Käfigs oder eines entsprechenden Zuleiters des anderen Moduls in der Eindringunsphase weniger als 16 mm aufweist.

7. Schneidmaschine nach Anspruch 6, dadurch gekennzeichnet, dass der Abstand E kleiner als 12 mm ist und vorzugsweise in der Größenordnung von 7 bis 9 mm liegt.

8. Schneidmaschine nach einem der Ansprüche 1 bis 5, dadurch gekennzeichnet, dass sie die Merkmale des Anspruchs 6 oder 7 aufweist.

## Claims

1. A cutting machine for use particularly in pruning and pre-pruning trellised vines and including at least one cutting head each having two assemblies, one being a cutting assembly (30) comprising a plurality of cutting tools (32) superposed and arranged around a shaft (31A) of axis (31), the other assembly being, either another cutting assembly (30) comprising a plurality of superposed cutting tools, or a feeder-assembly (40) comprising a plurality of feeder-tools (42) superposed and arranged around a shaft (41A) of axis (41), each stack of tools of a assembly being provided in a support which can swivel around an axis parallel to the assembly axis, each cutting tool comprising an outer component in the form of a cage having an aptitude for a rotation motion and an inner component housed in said cage, this inner component being formed by an independent cutting component (34) rotated by a motor (71), each feedertool having the shape of a disk with peripheral teeth and having an aptitude for a rotational motion, the cages, on the one hand, and the feeder-tools, on the other hand, being integral with each other, and the tools of one assembly being able to interpenetrate in corresponding spaces provided between the tools of the other assembly thanks to the action of at least one jack or equivalent means, characterised in that in the interpenetration phase, at least in a space Z or (140), the tangential components of the rotation speed of the feeders Vtₐ of the feeder-assembly (40) are greater than the tangential components of the rotation speed of the cages Vt_{c} of the cutting assembly (30) or that the tangential components of the rotation speed of the cages Vt_{c}' of one cutting assembly (30) are greater than the tangential components of the rotation speed of the cages Vt_{c} of the other cutting assembly (30).

2. A cutting machine according to claim 1, characterised in that the tangential components of the rotation speeds, either of the feeders Vtₐ of the assembly (40) and of the cages Vt_{c} of the assembly (30), or of the cages Vt_{c}' of one assembly (30) and of the cages Vt_{c} of the other assembly (30) are, on the periphery of said feeders and said cages, approximately equal to the rate of thrust V_{A} of the machine

3. A cutting machine according to claim 1 or 2, characterised in that at least in said space Z, the Vt_{c}/Vtₐ ratio is constant and that the mean ratio (Vtₐ-Vt_{c}/Vtₐ) zm is less than 1 and preferably about 0.35, or that the Vt_{c}/Vt_{c}' ratio is constant and that the mean ratio (Vt_{c}'-Vt_{c}/ Vt_{c}')_{Zm} is less than 1.

4. A cutting machine according to claim 1, 2 or 3, characterised in that, either the angular rotation speeds Vr_{c} of the cages of the assembly (30) and Vrₐ of the feeders of the assembly (40), or the angular rotation speeds Vr_{c} of the cages of one assembly (30) and Vr_{c}' of the cages of the other assembly (30) are adjustable by means of a device (131) and that the ratio Δ = Vr_{c}/Vrₐ or Δ = Vr_{c}/Vr_{c}' is constant.

5. A cutting machine according to claim 4, characterised in that the Δ ratio is less than 1.0.

6. A cutting machine for use particularly in pruning and pre-pruning trellised vines and including at least one cutting head each having two assemblies, one being a cutting assembly (30) comprising a plurality of cutting tools (32) superposed and arranged around a shaft (31A) of axis (31), the other assembly being, either another cutting assembly (30) comprising a plurality of superposed cutting tools, or a feeder-assembly (40) comprising a plurality of feeder-tools (42) superposed and arranged around a shaft (41A) of axis (41), each stack of tools of an assembly being provided in a support which can swivel around an axis parallel to the assembly axis, each cutting tool comprising an outer component in the form of a cage having an aptitude for a rotation motion and an inner component housed in said cage, this inner component being formed by an independent cutting component (34) rotated by a motor (71), each feedertool having the shape of a disk with peripheral teeth and having an aptitude for a rotation motion, and the cages, on the one hand, and the feeder-tools, on the other hand, being integral with each other, the tools of one assembly being able to interpenetrate in corresponding spaces provided between the tools of the other assembly thanks to the action of at least one jack or equivalent means, characterised in that in the interpenetration phase the distance E between an upper/lower face of a cage of one assembly and a lower/upper face of a corresponding cage or feeder of the other assembly is less than 16 mm.

7. A cutting machine according to claim 6, characterised in that the distance E is less than 12 mm. and, preferably of about 7 to 9 mm.

8. A cutting machine according to one of claims 1 to 5, characterised in that it has the characteristics of claim 6 or 7.
